Europäisches Patentamt

European Patent Office

Office européen des brevets

(11) EP 1 176 505 A1

(12) DEMANDE DE BREVET EUROPEEN

(43) Date de publication:
**30.01.2002 Bulletin 2002/05**

(51) Int Cl.7: **G06F 9/38**

(21) Numéro de dépôt: **01430021.4**

(22) Date de dépôt: **20.07.2001**

(84) Etats contractants désignés:
**AT BE CH CY DE DK ES FI FR GB GR IE IT LI LU MC NL PT SE TR**
Etats d'extension désignés:
**AL LT LV MK RO SI**

(30) Priorité: **27.07.2000 FR 0009882**

(71) Demandeur: STMicroelectronics S.A.
**92120 Montrouge (FR)**

(72) Inventeurs:
• **Sanches, José**
**38240 Meylan (FR)**
• **Daveau, Jean-Marc**
**38000 Grenoble (FR)**

• **Santana, Miguel**
**38420 Revel (FR)**
• **Paulin, Pierre**
**38660 Saint Vincent de Mercuze (FR)**
• **Cornero, Marco**
**Arlington, MA 02474 (US)**
• **Lepley, Thierry**
**38100 Grenoble (FR)**
• **Guillaume, Philippe**
**38120 Saint Egreve (FR)**
• **Harrand, Michel**
**38120 Saint Egreve (FR)**

(74) Mandataire: **Marchand, André**
**OMNIPAT, 24 Place des Martyrs de la Résistance**
**13100 Aix-en-Provence (FR)**

(54) **Processeur DSP à architecture parallèle**

(57) La présente invention concerne un processeur DSP prévu pour exécuter des instructions (I1-I4) de taille variable pouvant comprendre jusqu'à N codes élémentaires (c(0)-c(3)), et comprenant une mémoire programme (PMEM1) comprenant I bancs mémoire (M0-M3) en parallèle adressables individuellement, I étant au moins égal à N, dans laquelle les codes (c0-c9) d'un programme sont enregistrés de façon entrelacée à raison d'un code par banc et par adresse appliquée à un banc, et des moyens de lecture de la mémoire programme agencés pour lire un code dans chacun des I bancs mémoire au cours d'un cycle de lecture d'une instruction. Selon l'invention, les moyens de lecture de la mémoire programme comprennent des moyens (IAC) pour appliquer aux bancs mémoire des adresses individuelles (a0-a3) générées à partir d'une valeur collective (PC) de compteur ordinal qui est incrémentée, avant le commencement d'un cycle de lecture d'une instruction, d'une valeur (n) égale au nombre de codes que comprend l'instruction précédente, et des moyens (CSC) pour filtrer des codes (c1-c3) n'appartenant pas à une instruction à exécuter (I1), au moyen de bits de parallélisme ("p", "/p") accompagnant les codes.

Fig. 2

EP 1 176 505 A1

**Description**

La présente invention concerne les processeurs de traitement du signal numérique, ou processeur DSP ("Digital Signal Processors").

La présente invention concerne plus particulièrement les processeurs DSP à architecture parallèle, ou processeurs VLIW ("Very Large Instruction Word" ) .

Comme cela est bien connu de l'homme de l'art, les processeurs de type VLIW sont des processeurs hérités des processeurs RISC qui se distinguent des processeurs DSP conventionnels par le fait qu'ils comprennent plusieurs unités d'exécution agencées en parallèle. Chaque unité d'exécution est l'équivalent d'un coeur de processeur RISC (Reduced Instruction Set Computer) et exécute des codes instruction de format réduit, généralement de 16 bits, en exploitant les ressources offertes par une banque de registres. Chaque unité d'exécution pouvant exécuter un code instruction simultanément aux autres unités d'exécution, les processeurs VLIW sont donc capables d'exécuter simultanément une instruction large comprenant plusieurs codes "équivalents" RISC en parallèle.

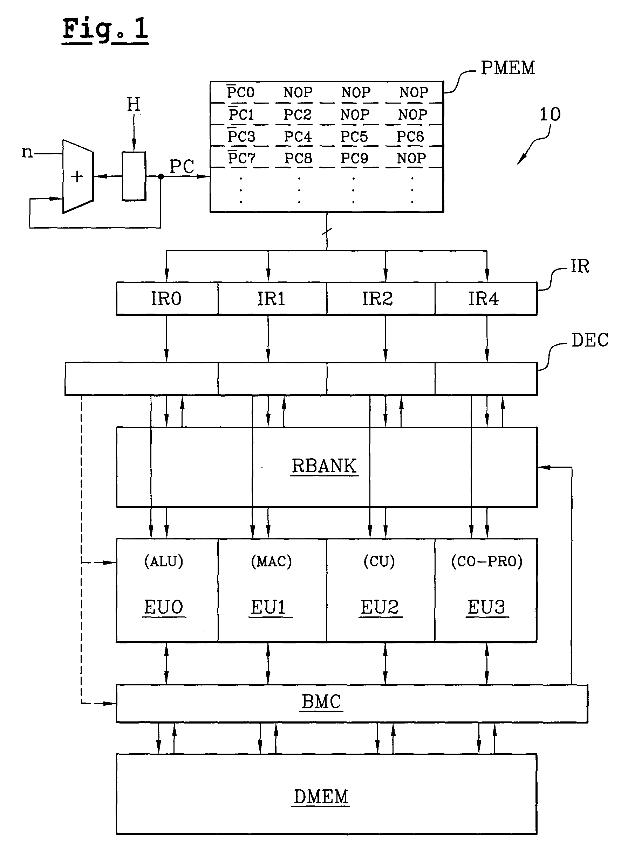

Pour fixer les idées, la figure 1 représente schématiquement la structure classique d'un processeur 10 de type VLIW, dont les éléments essentiels sont représentés sous forme de blocs. Le processeur 10 comprend une mémoire programme PMEM, une mémoire de données 12, un registre d'instructions IR agencé à la sortie de la mémoire PMEM, un décodeur d'instructions IDEC agencé à la sortie du registre IR, une banque de registres RBANK, prévue notamment pour l'exécution de codes instruction de type RISC, des unités d'exécution EU0 à EU3, ainsi qu'un circuit BMC formant l'interface entre les sorties des unités d'exécution UE1-UE3 et les entrées/sorties de la mémoire de données DMEM. Les unités d'exécution, ici quatre unités EU0, EU1, EU2, EU3, sont agencées en parallèle pour assurer le traitement simultané de quatre codes instruction lus simultanément dans la mémoire PMEM, formant ensemble une instruction large. La nature des unités d'exécution peut varier en fonction de l'application à laquelle le processeur est destiné. Les unités d'exécution comprennent par exemple une unité ALU (unité arithmétique et logique), une unité MAC (multiplication/adition), une unité CU (unité de contrôle, gérant le compteur ordinal PC et les branchements) et une unité CO-PRO (coprocesseur) pour effectuer certains calculs spécifiques à l'application visée.

Un tel processeur est ainsi capable d'assurer l'exécution d'instructions larges constituées ici au maximum par quatre codes. A chaque nouveau cycle d'horloge H, le compteur ordinal PC ("Program Counter") du processeur est augmenté d'un incrément n qui est égal à 1, sauf en cas de saut ou de branchement, et les registres d'instructions IR0-IR3 reçoivent simultanément en parallèle quatre nouveaux codes destinés à être exécutés par les unités EU0-EU3.

L'architecture d'un tel processeur 10 se distingue ainsi d'un processeur RISC conventionnel par son parallélisme, qui se retrouve dans tous les étages de traitement des instructions. Toutefois, les possibilités offertes par ce parallélisme sont rarement exploitées au maximum et les programmes compilés stockés dans la mémoire programme PMEM comprennent généralement un nombre élevée de codes de non-opération, ou codes "NOP" ("No Operation"). En effet, la transformation d'un programme écrit en langage de haut niveau, par exemple en langage C/C++, en une suite de codes de type RISC regroupés en paquets est effectuée de façon automatique par un programme de compilation qui connaît la structure du processeur et essaie de former des paquets ayant la plus grande taille possible (comprenant quatre codes au maximum dans l'exemple de processeur décrit) afin d'exploiter au maximum le parallélisme du processeur. Cette optimisation est faite en tenant compte des conflits entre les codes, de la disponibilité des unités d'exécution et des dépendances de données lors de l'exécution pipeline des codes. Ainsi, par exemple, deux codes destinés à être exécutés par la même unité d'exécution ne peuvent être parallélisés dans le même paquet. Egalement, un code utilisant une opérande qui est le résultat d'une opération visée par un autre code ne peut être exécuté tant que le code dont il dépend n'est pas lui-même exécuté.

A titre d'exemple, considérons la séquence de programme suivante :

| /p c0 | /p c1 | p c2 | /p c3 | p c4 | p c5 | p c6 | /p c7 | p c8 | p c9 |

qui comprend des codes instruction $c_0$ à $c_9$ comportant chacun un bit de parallélisme /p ou p. Les codes instruction, appelés "syllabes" dans le langage de l'homme de l'art, sont regroupés en "paquets" ("bundle") pour former des instructions larges. La séparation des instructions (paquets) au sein d'un programme est effectuée au moyen des bits de parallélisme "p" affectés à chacun des codes. Les deux valeurs possibles "/p" ou "p" d'un bit de parallélisme, par exemple 0 et 1, permettent de savoir si un code appartient ou non à une nouvelle instruction. Plus, particulièrement, un code précédé d'un bit de parallélisme "p" (par exemple 1) appartient à la même instruction que le code précédent, tandis qu'un code précédé d'un bit de parallélisme "/p" (par exemple 0) appartient par convention à un nouveau paquet.

Dans la séquence de programme mentionnée ci-dessus, les bits de parallélisme permettent ainsi de distinguer quatre instructions larges INST1 à INST4 :

   INST1 = c0

INST2 = c1 c2
INST3 = c3 c4 c5 c6
INST4 = c7 c8 c9

Pour pouvoir être exécutées par le processeur 10, ces instructions INST1 à INST4 sont enregistrées dans la mémoire programme PMEM du processeur comme représenté en figure 1 et décrit par le tableau 1 ci-après :

Tableau 1

| /p c0 | NOP | NOP | NOP |
|-------|-----|-----|-----|
| /p c1 | NOP | NOP | NOP |
| /p c3 | p c4 | p c5 | p c6 |
| /p c7 | p c8 | p c9 | NOP |

En conséquence, les compilateurs pour processeurs VLIW classiques génèrent un grand nombre de codes de non-opération qui ont pour but de maintenir certaines unités d'exécution inactives pendant que d'autres exécutent des codes. Il en résulte un encombrement inutile de la mémoire programme, qui peut représenter en pratique entre 20% et 70% de l'espace mémoire selon l'efficacité du compilateur et l'adéquation entre le programme à compiler et les ressources offertes par le processeur. Cet encombrement de l'espace mémoire par des codes NOP, qui est considérable au regard des codes instruction réellement nécessaires à l'exécution des programmes, augmente la surface de la mémoire PMEM pour une application donnée, donc entraîne une baisse de performance (mémoire plus lente avec la taille qui augmente), un surcroît de consommation (lignes de mots et lignes de bits plus longues dans le plan mémoire) et de coût (surface de silicium).

Plus particulièrement, la présente invention vise un processeur de type VLIW qui puisse recevoir dans sa mémoire programme des paquets de codes ne comportant pas de codes de non-opération.

La demande de brevet EP 473 420 décrit un processeur DSP comprenant une mémoire cache duale à double adressage sans code de non-opération et un circuit de pré-traitement dont le rôle est d'associer ou ne pas associer deux codes lus simultanément dans deux lignes de la mémoire en fonction d'un bit "IID" présent dans chaque code. Le bit "IID" est un bit de type, qui désigne le type du code considéré : code EXEC pour un calcul mathématique, ou code LD/ST de type load/store pour un accès à des registres ou à une mémoire. De façon générale, un bit type" IID n'est aucunement équivalent à un bit de parallélisme. Il désigne la nature intrinsèque des instructions. Ainsi, le circuit de pré-traitement traite les questions de compatibilité des codes lus en termes de co-exécution, deux codes de même nature (mêmes bits de type) ne pouvant être exécutés au cours d'un même cycle pipeline, tandis que dans une architecture de processeur utilisant des bits de parallélisme, la compatibilité des codes en termes de co-exécution est implicite dans l'agencement des bits de parallélisme et est prédéterminée par le compilateur.

Une idée de la présente invention, pour supprimer les codes NOP dans la mémoire d'un processeur utilisant des bits de parallélisme, est de prévoir un processeur à plusieurs bancs mémoire et entrelacement de codes dans lequel les bits de parallélisme sont utilisés pour sélectionner des codes exécutables en parallèle et éliminer ceux ne pouvant être exécutés qu'au cycle d'horloge suivant.

D'autre part, le document EP 473 420 enseigne un procédé de gestion de compteur ordinal pour mémoire à plusieurs bancs qui est complexe à mettre en oeuvre. L'enseignement divulgué par ce document ne permet pas la réalisation de processeurs ayant un haut taux de parallélisme (par exemple 4 co-processeurs en parallèle).

Ainsi, un autre objectif de la présente invention est de prévoir une gestion de compteur ordinal qui soit simple à mettre en oeuvre dans un processeur à entrelacement de codes ayant un grand nombre de bancs mémoire.

Une idée de la présente invention est de prévoir une valeur collective de compteur ordinal et un calcul algorithmique permettant d'adresser les bancs à partir de la valeur collective de compteur ordinal.

Ainsi, la présente invention prévoit un processeur de traitement du signal prévu pour exécuter des instructions de taille variable pouvant comprendre jusqu'à N codes élémentaires, comprenant une mémoire programme comprenant I bancs mémoire en parallèle adressables individuellement, I étant au moins égal à N, dans laquelle les codes d'un programme sont enregistrés de façon entrelacée à raison d'un code par banc et par adresse appliquée à un banc, et des moyens de lecture de la mémoire programme agencés pour lire un code dans chacun des I bancs mémoire au cours d'un cycle de lecture d'une instruction, dans lequel les moyens de lecture de la mémoire programme comprennent des moyens pour appliquer aux bancs mémoire des adresses individuelles générées à partir d'une valeur collective de compteur ordinal qui est incrémentée, avant le commencement d'un cycle de lecture d'une instruction, d'une valeur égale au nombre de codes que comprend l'instruction précédente, et des moyens pour filtrer des codes n'appartenant pas à une instruction à exécuter, au moyen de bits de parallélisme accompagnant les codes.

Selon un mode de réalisation, les moyens pour appliquer des adresses individuelles sont agencés pour appliquer à chacun des bancs mémoire une adresse égale à P0 ou P0+1, P0 étant le quotient de la division par I de la valeur du compteur ordinal.

Selon un mode de réalisation, les moyens pour appliquer des adresses individuelles sont agencés pour appliquer à un banc mémoire de rang i une adresse égale à P0 quand i est strictement supérieur à R, ou appliquer à un banc mémoire de rang i une adresse égale à P0+1 quand i est inférieur ou égal à R, R étant le reste de la division par I de la valeur du compteur ordinal.

Selon un mode de réalisation, les moyens de lecture comprennent des moyens pour réorganiser des codes lus dans la mémoire programme, conformément à l'algorithme suivant :

$$[c'(j) = c(i)$$

$$avec\ i = modulo\ I]$$

dans lequel "i" et "j" désignent les rangs des codes avant et après réorganisation, c(i) désigne des codes de rang i dans leur agencement après lecture dans la mémoire, c'(j) désigne des codes de rang j après réorganisation, R' étant le reste de la division par I de la valeur que présentait le compteur ordinal au cours du cycle d'horloge précédent.

Selon un mode de réalisation, les moyens pour réorganiser sont agencés pour appliquer à des codes lus dans la mémoire programme une permutation circulaire comprenant un nombre de permutations circulaires élémentaires égal à R' ou à [I-R'] selon le sens dans lequel est réalisée la permutation circulaire.

Selon un mode de réalisation, des permutations circulaires sont effectuées par un barillet à décalage recevant sur une entrée de commande le paramètre R'.

Selon un mode de réalisation, des codes filtrés sont remplacés par des codes de non-opération.

Selon un mode de réalisation, les moyens de filtrage de codes sont agencés pour exécuter l'algorithme suivant :

$$[Pour\ j = 0,$$

$$val(j=0) = "v"$$

$$s(j=0) = c'(j=0)\ ;$$

$$Pour\ j\ allant\ de\ 1\ à\ I$$

$$val(j) = "v"\ si :$$

$$val(j-1) = "v"\ et\ si\ bit\ de\ parallélisme\ de\ c'(j) = "p",$$

$$sinon\ val(j-1) = "/v"\ ;$$

$$s(j) = c'(j)\ si\ val(j) = "v"\ ;$$

$$s(j) = NOP\ si\ val(j) = "/v"\ ]$$

dans lequel val(j) est un terme de validation associé à chaque code c'(j) de rang j, pouvant présenter deux valeurs "v" et "/v", s(j) désigne des sorties de rang j des moyens de filtrage, correspondant à des entrées de même rang recevant un code c'(j), "NOP" est un code de non-opération.

Selon un mode de réalisation, des codes non filtrés sont envoyés à des unités d'exécution de type RISC agencées en parallèle.

La présente invention concerne également un procédé de lecture d'instructions de taille variable, mis en oeuvre dans un processeur de traitement du signal comprenant des moyens pour exécuter des instructions de taille variable pouvant comprendre jusqu'à N codes élémentaires, comprenant les étapes consistant à prévoir une mémoire programme comprenant I bancs mémoire en parallèle adressables individuellement, I étant au moins égal à N, enregistrer les codes d'un programme dans la mémoire programme de façon entrelacée, à raison d'un code par banc et par adresse appliquée à un banc et, au cours d'un cycle de lecture d'une instruction, lire un code dans chacun des I bancs mémoire, procédé dans lequel la lecture d'une instruction comprend l'application aux bancs mémoire d'adresses individuelles générées à partir d'une valeur collective de compteur ordinal qui est incrémentée, avant le commencement d'un cycle de lecture d'une instruction, d'une valeur égale au nombre de codes que comprend l'instruction précédente, et le filtrage de codes n'appartenant pas à l'instruction, au moyen de bits de parallélisme accompagnant les codes.

Selon un mode de réalisation, le procédé comprend une étape consistant à appliquer à chacun des bancs mémoire une adresse de lecture individuelle égale à P0 ou P0+1, P0 étant le quotient de la division par I de la valeur du compteur ordinal, un banc mémoire de rang i recevant une adresse égale à P0 quand i est strictement supérieur à R, ou une adresse égale à P0+1 quand i est inférieur ou égal à R, R étant le reste de la division par I de la valeur du compteur ordinal.

Selon un mode de réalisation, le procédé comprend une étape de réorganisation de codes lus dans la mémoire programme, conformément à l'algorithme décrit plus haut.

Selon un mode de réalisation, des codes filtrés sont remplacés par des codes de non-opération.

Selon un mode de réalisation, les codes sont filtrés conformément à l'algorithme décrit plus haut.

Selon un mode de réalisation, des codes non filtrés sont envoyés à des unités d'exécution de type RISC agencées en parallèle.

Ces objets, caractéristiques et avantages ainsi que d'autres de la présente invention seront exposés plus en détail dans la description suivante d'un exemple de réalisation d'un processeur selon l'invention, faite à titre non limitatif en relation avec les figures jointes parmi lesquelles :

- la figure 1 précédemment décrite représente sous forme de blocs l'architecture d'un processeur VLIW classique,
- la figure 2 représente sous forme de blocs l'architecture d'un processeur selon l'invention,
- les figures 3 et 4 représentent des modes de réalisation d'éléments représentés sous forme de blocs en figure 2.

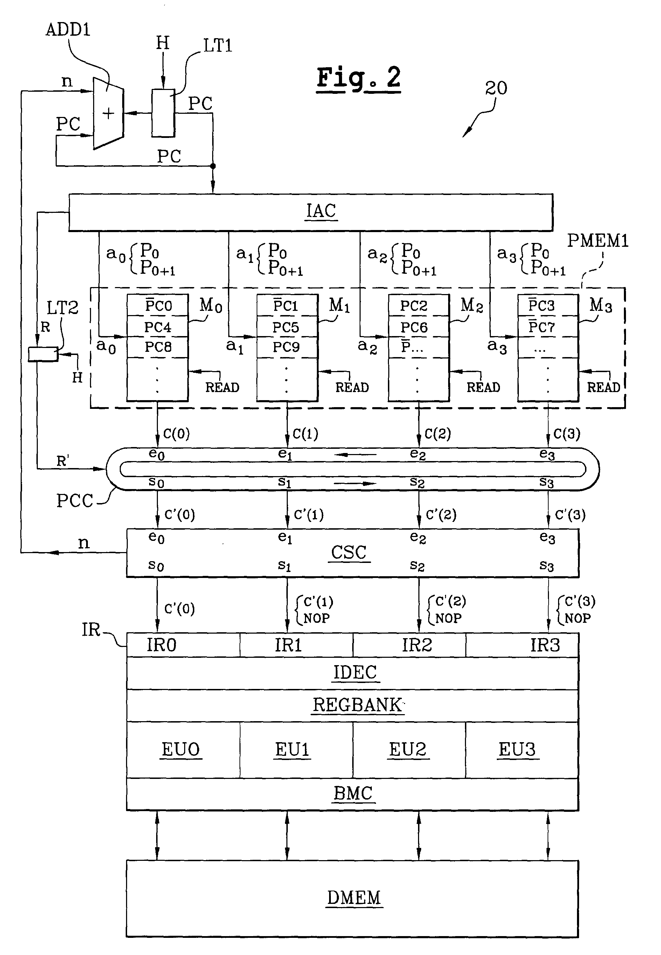

La figure 2 représente schématiquement l'architecture d'un processeur de traitement du signal 20 selon l'invention. Le processeur 20 comprend, comme le processeur classique de la figure 1, une mémoire programme PMEM1, une mémoire de données DMEM, un registre d'instructions IR, un décodeur d'instructions IDEC agencé à la sortie du registre IR, une banque de registres RBANK, des unités d'exécution, ici quatre unités EU0 à EU3, ainsi qu'un circuit BMC ("Built-In Self Test/Mapping/Conflicts") prévu pour lire ou écrire des données dans la mémoire de données DMEM ou dans la banque de registres RBANK et assurant diverses autres fonctions comme l'autotest des mémoires ("Built-In Self Test" ou "BIST") et la gestion des conflits d'adresses. Le registre d'instructions IR comprend quatre registres IR0 à IR3 en parallèle, prévus pour recevoir à chaque cycle de lecture d'une instruction (cycle "fetch") quatre codes instruction $c'(0)$ à $c'(3)$ délivrés par la mémoire programme PMEM1. Le décodeur d'instructions IDEC assure le décodage des codes $c'(0)$-$c'(3)$ ainsi que la distribution des opérandes en direction des unités d'exécution concernées. Ces éléments sont en soi classiques et constituent le coeur du processeur, représenté schématiquement sous la forme d'un bloc.

Le processeur 20 selon l'invention se distingue d'un processeur classique par le fait que la mémoire programme PMEM1 est constituée par plusieurs bancs mémoire agencés en parallèle, ici quatre bancs M0, M1, M2, M3 adressables individuellement et recevant respectivement des adresses a0, a1, a2, a3. Dans ce qui suit, on désignera par "I" le nombre de bancs mémoire adressables individuellement présents dans un processeur selon l'invention, et par "N" le nombre maximal de codes instruction pouvant être contenus dans une instruction large (paquet), I devant au moins être égal à N. Ici, I est égal à N qui est égal à 4 puisque le processeur comprend quatre unités d'exécution.

Selon l'invention, les codes instruction (syllabes) d'un programme sont enregistrés dans la mémoire PMEM1 de façon entrelacée, de telle sorte que deux codes se succédant dans le programme soient agencés dans deux bancs mémoire contigus de rangs croissants, avec la même adresse $a_i$ dans chaque banc. Lorsqu'un code est enregistré dans le dernier banc mémoire M3, à une adresse a3 = "x", le code suivant est enregistré dans le banc mémoire M0 à l'adresse a0 = "x+1", et les codes suivants sont enregistrés dans les bancs M1, M2, M3 aux adresses a1 = a2 = a3 = "x+1", etc..

Pour fixer les idées, considérons que la séquence de programme suivante, déjà décrite au préambule, est stockée dans la mémoire virtuelle PMEM1 :

    INST1 = c0
    INST2 = c1 c2
    INST3 = c3 c4 c5 c6
    INST4 = c7 c8 c9

A la différence d'un processeur classique, les codes constituant les instructions larges INST1 à INST4 sont enregistrés dans les bancs mémoire les uns après les autres sans injection de codes de non-opération NOP, comme cela apparaît dans le tableau 2 ci-après, la séparation des instructions étant assurée exclusivement par les bits de parallélisme.

Tableau 2

| Adresses | Banc M0 | Banc M1 | Banc M2 | Banc M3 |
|----------|---------|---------|---------|---------|
| x | /p c0 | /p c1 | p c2 | /p c3 |
| x+1 | p c4 | p c5 | p c6 | /p c7 |
| x+2 | p c8 | p c9 | /p... | ... |

Notons ici que les bits de parallélisme sont représentés ici comme des éléments extérieurs aux codes c0 à c9 pour faciliter la compréhension de l'invention. En pratique, les bits de parallélisme font partie intégrante des codes stockés en mémoire et sont éliminés au moment de l'exécution des codes. Par exemple, les codes c0-c9 comprennent 16 bits parmi lesquels un bit est utilisé en tant que bit de parallélisme.

Ainsi, avantageusement, le processeur selon l'invention reçoit des programmes compactés ne comportant pas de codes NOP. Il en résulte une diminution substantielle de l'encombrement de l'espace mémoire entraînant une baisse de la surface nécessaire au stockage du programme et une diminution de la consommation.

On va maintenant décrire des moyens de lecture de la mémoire PMEM1, prévus pour "désentrelacer" les codes instruction afin d'en extraire des instructions larges, ou "paquets", comprenant plusieurs codes ou "syllabes" destinés à être exécutés simultanément.

Selon l'invention, ces moyens de lecture comprennent essentiellement un circuit de gestion d'adresses IAC, un circuit de permutation de codes PCC et un circuit de sélection de codes CSC, et consistent également dans une gestion particulière du compteur ordinal PC ("program counter") du processeur 20, qui sera tout d'abord décrite.

Le compteur ordinal PC est incrémenté de façon classique à chaque cycle d'horloge, par exemple au moyen d'un additionneur ADD1 recevant sur une entrée la valeur courante du compteur ordinal et sur une autre entrée un incrément n, la sortie de l'additionneur étant appliquée à un tampon LT1 piloté par le signal d'horloge H. Selon l'invention, le compteur ordinal PC est incrémenté d'une valeur $n$ qui n'est pas constante comme dans l'art antérieur. L'incrément $n$ est égal au nombre de codes instruction exécutables que comprend l'instruction précédente et est ici délivré par le circuit CSC décrit plus loin.

Cette règle d'incrémentation du compteur ordinal concerne bien entendu la lecture séquentielle des instructions d'un programme et ne s'applique pas lors de l'exécution d'instructions spéciales comme des instructions de saut ou de branchement, pour lesquelles l'incrément de saut ou la valeur de branchement est imposé par le programme.

Le circuit de gestion d'adresses IAC mentionné plus haut assure le calcul des adresses individuelles a0-a3 appliquées aux bancs mémoire à partir de la valeur courante du compteur ordinal PC, incrémentée de la manière qui vient d'être décrite. Plus particulièrement, le circuit IAC calcule les adresses a0-a3 en appliquant l'algorithme A1 suivant :

A1 :     Pour i allant de 0 à I-1,

$$a_i = P0+1 \text{ si } i < R$$

$$a_i = P0 \text{ si } i \geq R$$

dans lequel :

1) "i" est l'indice désignant le rang des bancs mémoire M0-M3 et le rang des adresses correspondantes a0-a3,

2) P0 est le quotient de la division par I du compteur ordinal PC, soit :

$$P0 = \text{Quotient } (PC/I)$$

soit ici, I étant égal à 4 :

$$P0 = \text{Quotient } (PC/4)$$

3) R est le reste de la division par I du compteur ordinal PC, soit :

$$R = PC - P0 = PC \text{ modulo } I,$$

soit ici, I étant égal à 4 :

$$R = PC \text{ modulo } 4$$

Des exemples de mise en oeuvre de cet algorithme, ainsi qu'un exemple de réalisation du circuit IAC seront décrits plus loin.

Le circuit de permutation de codes PCC mentionné plus haut est relié à la sortie de la mémoire programme PMEM1 et comprend des entrées e0 à e3 connectées respectivement aux sorties des bancs mémoire M0 à M3 et recevant respectivement des codes c(0), c(1), c(2), c(3) lus dans la mémoire programme. Le circuit PCC comprend également quatre sorties s0, s1, s2, s3 délivrant respectivement des codes c'(0), c'(1), c'(2), c'(3). Les codes délivrés sont égaux aux codes reçus en entrée mais sont réorganisés par le circuit PCC selon l'algorithme A2 suivant :

$$A2 : \quad \text{Pour i allant de 0 à N-1}$$

$$\text{et j allant de 0 à N-1}$$

$$c'(j) = c(i), \text{ avec } i = (j + R') \text{ modulo } I$$

dans lequel :

1) "i" est l'indice mentionné plus haut, désignant ici le rang des codes d'entrée c(0)-c(3) délivrés par les bancs mémoire M0-M3,

2) "j" est un indice désignant le rang des codes de sortie c'(0)-c'(3),

3) R' est le reste de la division par I du compteur ordinal PC, calculé au cycle d'horloge précédent.

Comme représenté en figure 2, le circuit PCC peut être réalisé simplement au moyen d'un barillet à décalage ("Barrel Shifter") d'un type connu en soi. L'algorithme A2 est mis en oeuvre en appliquant sur l'entrée de commande du barillet, par l'intermédiaire d'un tampon LT2, le paramètre R calculé et délivré par le circuit IAC. Le tampon LT2 étant piloté par le signal d'horloge, le paramètre R qui est appliqué au barillet après chaque front du signal d'horloge est décalé d'un cycle d'horloge relativement au paramètre R du cycle en cours et est donc égal au paramètre R' mentionné plus haut. Le barillet PCC est agencé pour décaler ses sorties relativement à ses entrées par permutation circulaire à gauche (sens des poids forts vers les poids faibles), en effectuant un nombre de décalages à gauche égal à R'. Dans une variante de réalisation, le barillet reçoit sur son entrée de commande le complément de R' à I, soit la valeur [I-R'], et est agencé pour décaler ses sorties relativement à ses entrées par permutation circulaire à droite (sens des poids faibles vers les poids forts) en effectuant un nombre de décalages à droite égal à [I-R'].

Le circuit de sélection de codes CSC mentionné plus haut est connecté en entrée à la sortie du circuit PCC et comprend des entrées e0 à e3 recevant respectivement les codes c'(0) à c'(3). Le circuit CSC comprend également quatre sorties s0 à s3 qui recopient le code reçu sur l'entrée de même rang dans des conditions prévues par l'algorithme A3 suivant :

$$A3 : \quad \text{Pour } j = 0$$

$$val(j=0) = "v"$$

$$s(j=0) = c'(j=0)$$

$$\text{Pour j allant de 1 à I}$$

$$val(j) = "v"$$

si val(j-1) = "v" et si bit de parallélisme de c'(j)="p"

sinon val(j-1) = "/v"

s(j) = c'(j) si val(j) = "v",

s(j) = NOP si val(j) = "/v"

dans lequel val(j) est un terme de validation récursif de type "daisy chain", associé à chaque sortie s(j) de rang j, pouvant présenter deux valeurs "v" et "/v", par exemple "1" et "0". Pour les sorties de rang "j" allant de 1 à I, ce terme permet de déterminer si une sortie s(j) doit recopier le code c'(j) reçu sur l'entrée de rang correspondant ou doit au contraire délivrer un code NOP. Ce choix est fonction de la valeur du terme de validation val(j), qui est elle-même fonction de la valeur du terme de validation précédent val(j-1) et de la valeur "p" ou "/p", par exemple "1" ou "0", du bit de parallélisme présent dans le code c'(j).

En d'autres termes, en attribuant par convention la valeur 1 à "p" et "v" et la valeur "0" à "/p" et "/v", la sortie s0 recopie le code c'(0) reçu sur l'entrée e0 et chacune des autres sorties s(j) recopie le code c'(j) reçu sur l'entrée correspondante e(j) si le code c'(j) comprend un bit de parallélisme égal à "1" et si le bit de validation val(j-1) de la sortie de rang précédent est aussi égal à "1". Quand le bit de parallélisme d'un code c'(j) est égal à "0", la sortie correspondante s(j) et toutes les sorties suivantes délivrent un code NOP.

Le système de lecture de la mémoire programme PMEM1 fonctionne ainsi comme suit :

**Etape E1 :** au cours d'un premier cycle d'horloge, le circuit IAC applique aux bancs mémoire M0-M3 des adresses a0-a3 assurant la lecture de quatre codes instruction a(0)-a(3), qui se suivent dans la mémoire PMEM1 selon l'entrelacement décrit plus haut ;

**Etape E2-1 :** au cours du cycle d'horloge suivant, un signal de lecture READ est appliqué aux bancs mémoire et les codes sont lus dans un ordre qui peut ne pas correspondre, en raison de leur entrelacement, à leur rang effectif prévu dans le programme. Ils sont remis dans l'ordre par le circuit PCC en application de l'algorithme A2, au moyen du paramètre R' calculé au cycle d'horloge précédent (c'est-à-dire au moment de l'élaboration des adresses a0-a3) ;

**Etape E2-2 :** au cours du même cycle d'horloge, le circuit de sélection CSC identifie les codes qui ne correspondent pas à l'instruction à exécuter, grâce à leur bit de parallélisme "/p" et les remplace par des codes de non-opération NOP ;

**Etape E2-3 :** au cours du même cycle d'horloge le registre d'instructions IR0 reçoit le code c'(0) et les registres IR1-IR3 reçoivent les codes filtrés (NOP) ou non filtrés selon la sélection faite par le circuit CSC ;

**Etape E3 et suivantes :** les codes non filtrés sont décodés par le décodeur IDEC et exécutés par les unités EU0-EU4.

Ainsi, la lecture d'une instruction large est faite en deux cycles d'horloge comme dans l'art antérieur, et comprend un cycle pour l'élaboration des adresses a0-a3 et un cycle pour la lecture des codes. Les codes lus sont réorganisés et filtrés au cours du cycle de lecture, l'opération étant "transparente" pour le fonctionnement de l'ensemble. Ces étapes sont effectuées avec chevauchement, selon les règles classiques de fonctionnement pipeline, les registres pipeline n'ayant pas été décrits et représentés dans un souci de simplicité.

Le tableau 3 figurant en Annexe fait partie intégrante de la description et illustre le fonctionnement du processeur pour la lecture des instructions INST1 à INST4 décrites plus haut. Les paramètres PC, R, R' et P0 intervenant dans l'exécution des algorithmes sont mentionnés dans les premières colonnes. On considère dans cet exemple que les codes des instructions INST1 à INST3 sont stockés dans la mémoire programme PMEM1 à partir de l'adresse 0 et que le compteur ordinal est égal à 0 au commencement du processus de lecture. Les colonnes a0-a3 donnent les valeurs des adresses calculées à partir de la valeur courante du compteur ordinal PC. Les colonnes c(0)-c(3) donnent les valeurs des codes lus dans la mémoire dans l'ordre dans lequel ils se trouvent. Les colonnes c'(0) c'(3) donnent les valeurs des codes après réorganisation par le circuit PCC. Les quatre dernières colonnes c'(0)-c'(3) donnent les valeurs des codes après filtrage dans le circuit CSC.

En observant les quatre dernières colonnes du tableau 3, il apparaît que les codes qui y figurent sont équivalents, en agencement et en valeur, aux codes qui se trouvaient dans la mémoire du processeur classique décrit au préambule (voir le tableau 1 au préambule). Ainsi, le système de lecture selon l'invention reconstitue les codes NOP qui étaient, dans l'art antérieur, enregistrés dans la mémoire programme.

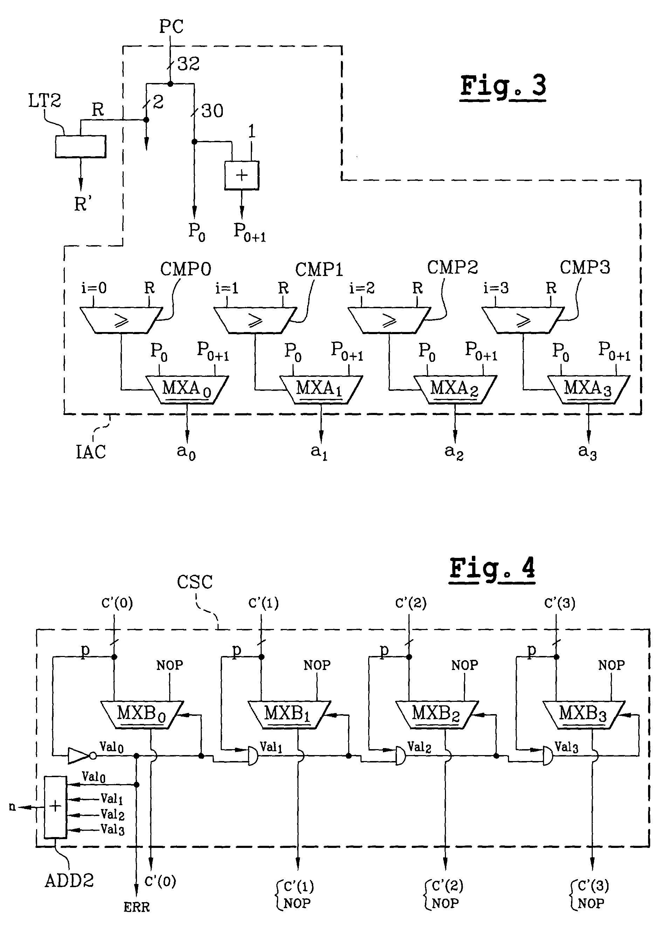

De façon générale, la réalisation des circuits IAC et CSC est à la portée de l'homme de l'art, notamment grâce aux techniques de conception automatique de circuits logiques à partir du langage VHDL. Les algorithmes A1 et A3 mentionnés plus haut sont exprimés en langage VHDL et les circuits IAC et CSC sont générés automatiquement par un compilateur de langage VHDL, sous forme de circuits à logique câblée. On décrira toutefois à titre non limitatif, en relation avec les figures 3 et 4, des exemples de réalisation des circuits IAC et CSC dans le cas où les paramètres I et N sont égaux à 4.

Sur la figure 3, le circuit IAC reçoit en entrée la valeur d'un compteur ordinal PC codée sur 32 bits. Le résultat R est obtenu de façon simple en séparant les deux fils de poids faible de la ligne physique véhiculant le compteur ordinal PC, R étant ainsi égal aux deux bits de poids faible du compteur ordinal. De même, P0 est égal aux 30 bits de poids fort du compteur ordinal et est obtenu en séparant les 30 fils de poids fort. Le paramètre P0 +1 est calculé par un additionneur recevant les valeurs P0 et "1" en entrée. Les adresses a0-a3 sont délivrées par des multiplexeurs MXA1-MXA3 recevant en entrée les paramètres P0 et P0+1. Ces multiplexeurs sont pilotés par des comparateurs CMP0-CMP3 recevant sur une première entrée l'indice "i" et sur une seconde entrée le paramètre R.

Sur la figure 4, le circuit CSC est réalisé au moyen de quatre multiplexeurs MXB0-MXB3 recevant chacun un code c'(j) sur une première entrée et un code NOP sur une deuxième entrée. Chaque multiplexeur est piloté par un signal de validation val0, val1, val2, val3 dont la valeur détermine la sélection du code c'(j) ou du code NOP en sortie du multiplexeur. Les codes de validation sont générés par une cascade de portes ET formant une chaîne de type "Daisy Chain", chaque porte ET recevant en entrée le signal de validation du code précédent et le bit de parallélisme du code reçu par le multiplexeur auquel elle est rattachée. Ainsi, la présence d'un bit de parallélisme à 0 dans un code c'(j) entraîne le basculement de tous les signaux de validation suivants, de sorte que le code concerné et tous les codes suivants sont remplacés par des codes NOP. Le signal de validation val0 du premier code c'(0) est généré par une porte inverseuse car le bit de parallélisme du premier code est en principe toujours égal à 0 ("/p"). Le multiplexeur MUXB0 et le signal de sélection val0 du premier code c'(0) sont en principe inutiles puisque le premier code c'(0) n'est, en principe, jamais filtré, une instruction large comprenant au moins un code instruction. Toutefois, la prévision de ce multiplexeur permet de détecter un éventuel défaut de lecture de la mémoire programme ou un défaut de fonctionnement du circuit à décalage PCC, qui apparaît quand le bit de parallélisme du premier code c'(0) est différent de 0. Dans ce cas, le signal de validation val0 peut être utilisé en tant que signal d'erreur ERR.

Le circuit CSC comprend également un additionneur ADD2 recevant en entrée les quatre signaux de validation val0 à val3, dont la sortie délivre la valeur n qui est appliquée à l'additionneur ADD1 pour l'incrémentation du compteur ordinal (fig. 2). L'incrément n est ainsi égal au nombre de signaux de validation égaux à 1, et représente par conséquent le nombre de codes instruction qui n'ont pas été filtrés, c'est-à-dire le nombre effectif de codes que comprend l'instruction large qui vient d'être lue.

La présente invention est bien entendu susceptible de diverses variantes et modes de réalisation. Notamment, il est envisageable en pratique d'incorporer le circuit de filtrage CSC dans le décodeur d'instructions IDEC. En effet, la fonction de ce circuit est de garantir que des codes n'appartenant pas à une instruction à exécuter ne seront pas envoyés aux unités d'exécution EU0-EU3. Le filtrage des codes indésirables peut ainsi être fait en aval du registre d'instructions IDEC, par le décodeur IDEC lui-même. De façon générale, l'agencement du circuit CSC dans les étages pipeline est dicté par les contraintes temporelles ("timing") concernant l'accès à la mémoire PMEM1 et par le temps de décodage dans de décodeur IDEC, et relève des compétences de l'homme de l'art.

Il apparaîtra clairement à l'homme de l'art que la présente invention offre un large degré de liberté dans la conception d'un processeur de type VLIW. Il est notamment possible, comme on l'a indiqué plus haut, de prévoir un processeur ayant un nombre I de bancs mémoire et un nombre N d'unités d'exécution qui sont différents. Il est également possible de choisir de façon dynamique le nombre N d'unités d'exécution actives, selon l'application visée, en inhibant certaines unités d'exécution pour limiter la consommation de courant. Cette inhibition de certaines unités d'exécution peut être prévue programmable. L'architecture d'un processeur selon l'invention n'étant pas "figée" comme celle d'un processeur VLIW classique, grâce à la suppression de l'obligation de lire en bloc N codes instruction et de l'obligation qui en résulte d'injecter des codes NOP dans un programme quand une instruction contient moins de N codes, la présente invention ouvre un large domaine de conception d'un nouveau type de processeurs conciliant des exigences de faible consommation, de faible encombrement en termes de surface de silicium, et offrant de hautes performances grâce à un parallélisme élevé.

**ANNEXE**

Rappels :

$I = 4$ ; $N = 4$

$P0 = $ Quotient PC/I

$R = $ PC[modulo I]

$R' = $ "R" du cycle d'horloge précédent

$a_i = P0+1$ si $i < R$, sinon $a_i = P0$

$c'(j) = c(i)$, avec $i=(j+R')$[modulo I]


Tableau 3 : lecture instructions INST1 à INST3 dans bancs mémoire M0 à M3

| Cycle | PC | R | R' | P0 | (Adressage bancs M1-M3) | | | | (Sorties bancs M1-M3) | | | | (Sorties circuit PCC) | | | | (Sorties circuit CSC) | | | |
|---|---|---|---|---|---|---|---|---|---|---|---|---|---|---|---|---|---|---|---|---|
| | | | | | a0 | a1 | a2 | a3 | c(0) | c(1) | c(2) | c(3) | c'(0) | c'(1) | c'(2) | c'(3) | c'(0) | c'(1) | c'(2) | c'(3) |
| 1 | 0 | 0 | - | 0 | 0 | 0 | 0 | 0 | - | - | - | - | | | | | | | | |
| 2 | 1 | 1 | 0 | 0 | 1 | 0 | 0 | 0 | c0 | c1 | c2 | c3 | c0 | c1 | c2 | c3 | c0 | NOP | NOP | NOP |
| 3 | 3 | 3 | 1 | 0 | 1 | 1 | 1 | 0 | c4 | c1 | c2 | c3 | c1 | c2 | c3 | c4 | c1 | c2 | NOP | NOP |
| 4 | 7 | 3 | 3 | 1 | 2 | 2 | 2 | 1 | c4 | c5 | c6 | c3 | c3 | c4 | c5 | c6 | c3 | c4 | c5 | c6 |
| 5 | 8 | 0 | 3 | 2 | | | | | c8 | c9 | ... | c7 | c7 | c8 | c9 | ... | c7 | c8 | c9 | NOP |

EP 1 176 505 A1

**Revendications**

1. Processeur (20) de traitement du signal prévu pour exécuter des instructions (I1-I4) de taille variable pouvant comprendre jusqu'à N codes élémentaires (c(0)-c(3)), comprenant :

    - une mémoire programme (PMEM1) comprenant I bancs mémoire (M0-M3) en parallèle adressables individuellement, I étant au moins égal à N, dans laquelle les codes (c0-c9) d'un programme sont enregistrés de façon entrelacée à raison d'un code par banc et par adresse appliquée à un banc, et
    - des moyens de lecture de la mémoire programme agencés pour lire un code dans chacun des I bancs mémoire au cours d'un cycle de lecture d'une instruction,

    **caractérisé en ce que** les moyens de lecture de la mémoire programme comprennent :

    - des moyens (IAC) pour appliquer aux bancs mémoire des adresses individuelles (a0-a3) générées à partir d'une valeur collective (PC) de compteur ordinal qui est incrémentée, avant le commencement d'un cycle de lecture d'une instruction, d'une valeur (*n*) égale au nombre de codes que comprend l'instruction précédente, et
    - des moyens (CSC) pour filtrer des codes (c1-c3) n'appartenant pas à une instruction à exécuter (I1), au moyen de bits de parallélisme ("p", "/p") accompagnant les codes.

2. Processeur selon la revendication 1, dans lequel les moyens (IAC) pour appliquer des adresses individuelles sont agencés pour appliquer à chacun des bancs mémoire une adresse égale à P0 ou P0+1, P0 étant le quotient de la division par I de la valeur du compteur ordinal.

3. Processeur selon la revendication 2, dans lequel les moyens (IAC) pour appliquer des adresses individuelles sont agencés pour :

    - appliquer à un banc mémoire de rang i une adresse égale à P0 quand i est strictement supérieur à R, ou
    - appliquer à un banc mémoire de rang i une adresse égale à P0+1 quand i est inférieur ou égal à R,

    R étant le reste de la division par I de la valeur du compteur ordinal.

4. Processeur selon l'une des revendications 1 à 3, dans lequel les moyens de lecture comprennent des moyens (PCC) pour réorganiser des codes lus dans la mémoire programme, conformément à l'algorithme suivant :

$$[c' (j) = c(i)$$

$$avec\ i = (j+R')modulo\ I]$$

    dans lequel "i" et "j" désignent les rangs des codes avant et après réorganisation, c(i) désigne des codes de rang i dans leur agencement après lecture dans la mémoire, c'(j) désigne des codes de rang j après réorganisation, R' étant le reste de la division par I de la valeur que présentait le compteur ordinal au cours du cycle d'horloge précédent.

5. Processeur selon la revendication 4, dans lequel les moyens pour réorganiser (PCC) sont agencés pour appliquer à des codes lus dans la mémoire programme une permutation circulaire comprenant un nombre de permutations circulaires élémentaires égal à R' ou à [I-R'] selon le sens dans lequel est réalisée la permutation circulaire.

6. Processeur selon la revendication 5, dans lequel des permutations circulaires sont effectuées par un barillet à décalage recevant sur une entrée de commande le paramètre R'.

7. Processeur selon l'une des revendications 1 à 6, dans lequel des codes filtrés sont remplacés par des codes de non-opération (NOP).

8. Processeur selon la revendication 7, dans lequel les moyens de filtrage de codes (CSC) sont agencés pour exécuter l'algorithme suivant :

$$[\text{Pour } j = 0,$$

$$val(j=0) = \text{"v"}$$

$$s(j=0) = c'(j=0) ;$$

$$\text{Pour } j \text{ allant de 1 à I}$$

$$val(j) = \text{"v" si :}$$

$$val(j-1) = \text{"v" et si bit de parallélisme de } c'(j)=\text{"p",}$$

$$\text{sinon } val(j-1) = \text{"/v" ;}$$

$$s(j) = c' (j) \text{ si } val(j) = \text{"v" ;}$$

$$s(j) = NOP \text{ si } val(j) = \text{"/v" }]$$

dans lequel $val(j)$ est un terme de validation associé à chaque code $c'(j)$ de rang $j$, pouvant présenter deux valeurs "v" et "/v", $s(j)$ désigne des sorties de rang $j$ des moyens de filtrage, correspondant à des entrées de même rang recevant un code $c'(j)$, "NOP" est un code de non-opération.

**9.** Processeur selon l'une des revendications 1 à 8, dans lequel des codes non filtrés sont envoyés à des unités d'exécution de type RISC (EU0-EU3) agencées en parallèle.

**10.** Procédé de lecture d'instructions de taille variable, mis en oeuvre dans un processeur de traitement du signal (20) comprenant des moyens pour exécuter des instructions (I1-I4) de taille variable pouvant comprendre jusqu'à N codes élémentaires (c(0)-c(3)), comprenant les étapes consistant à :

- prévoir une mémoire programme (PMEM1) comprenant I bancs mémoire (M0-M3) en parallèle adressables individuellement, I étant au moins égal à N,
- enregistrer les codes (c0-c9) d'un programme dans la mémoire programme (PMEM1) de façon entrelacée, à raison d'un code par banc et par adresse appliquée à un banc, et
- au cours d'un cycle de lecture d'une instruction, lire un code (c0-c3) dans chacun des I bancs mémoire (M0-M3),

**caractérisé en ce que** la lecture d'une instruction comprend :

- l'application aux bancs mémoire d'adresses individuelles (a0-a3) générées à partir d'une valeur collective (PC) de compteur ordinal qui est incrémentée, avant le commencement d'un cycle de lecture d'une instruction, d'une valeur ($n$) égale au nombre de codes que comprend l'instruction précédente, et
- le filtrage de codes (c1-c3) n'appartenant pas à l'instruction, au moyen de bits de parallélisme ("p", "/p") accompagnant les codes.

**11.** Procédé selon la revendication 10, comprenant une étape consistant à appliquer à chacun des bancs mémoire une adresse de lecture individuelle égale à P0 ou P0+1, P0 étant le quotient de la division par I de la valeur du compteur ordinal, un banc mémoire de rang $i$ recevant une adresse égale à P0 quand $i$ est strictement supérieur à R, ou une adresse égale à P0+1 quand $i$ est inférieur ou égal à R, R étant le reste de la division par I de la valeur du compteur ordinal.

**12.** Procédé selon l'une des revendications 10 et 11, comprenant une étape de réorganisation de codes lus dans la mémoire programme, conformément à l'algorithme suivant :

$$[c'(j) = c(i)$$

$$\text{avec } i = (j+R')\text{modulo I}]$$

dans lequel "i" et "j" désignent les rangs des codes avant et après réorganisation, c(i) désigne des codes de rang i dans leur agencement après lecture dans la mémoire, c'(j) désigne des codes de rang j après réorganisation, R' étant le reste de la division par I de la valeur que présentait le compteur ordinal au cours du cycle d'horloge précédent.

13. Procédé selon l'une des revendications 10 à 12, dans lequel des codes filtrés sont remplacés par des codes de non-opération (NOP).

14. Procédé selon la revendication 13, dans lequel les codes sont filtrés conformément à l'algorithme suivant :

[Pour j = 0,

val(j=0) = "v"

s(j=0) = c'(j=0) ;

Pour j allant de 1 à l

val(j) = "v" si :

val(j-1) = "v" et si bit de parallélisme de c'(j)="p",

sinon val(j-l) = "/v" ;

s(j) = c'(j) si val(j) = "v" ;

s(j) = NOP si val(j) = "/v" ]

dans lequel val(j) est un terme de validation associé à chaque code c'(j) de rang j, pouvant présenter deux valeurs "v" et "/v", s(j) désigne des sorties de rang j des moyens de filtrage, correspondant à des entrées de même rang recevant un code c'(j), "NOP" est un code de non-opération.

15. Procédé selon l'une des revendications 10 à 14, dans lequel des codes non filtrés sont envoyés à des unités d'exécution de type RISC (EU0-EU3) agencées en parallèle.

## Fig. 1

## Fig. 2

Fig. 3

Fig. 4

**Office européen des brevets**

## RAPPORT DE RECHERCHE EUROPEENNE

Numéro de la demande

EP 01 43 0021

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | EP 0 473 420 A (HITACHI LTD) 4 mars 1992 (1992-03-04) | 1,7,9, 10,13,15 | G06F9/38 |
| Y | * page 5, ligne 57 - page 7, ligne 28; figure 5 * | 2,3,11 | |
| Y | US 5 806 082 A (SHAW JENG-JYE) 8 septembre 1998 (1998-09-08) * le document en entier * | 2,3,11 | |
| A | EP 0 855 648 A (TEXAS INSTRUMENTS INC) 29 juillet 1998 (1998-07-29) | | |

DOMAINES TECHNIQUES RECHERCHES (Int.Cl.7)

G06F

Le présent rapport a été établi pour toutes les revendications

| Lieu de la recherche | Date d'achèvement de la recherche | Examinateur |
|---|---|---|
| LA HAYE | 20 novembre 2001 | Daskalakis, T |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03 82 (P04C02)

**ANNEXE AU RAPPORT DE RECHERCHE EUROPEENNE**
**RELATIF A LA DEMANDE DE BREVET EUROPEEN NO.**

EP 01 43 0021

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

20-11-2001

| Document brevet cité au rapport de recherche | | Date de publication | Membre(s) de la famille de brevet(s) | | Date de publication |
|---|---|---|---|---|---|
| EP 0473420 | A | 04-03-1992 | US<br>EP<br>JP | 5163139 A<br>0473420 A2<br>4313121 A | 10-11-1992<br>04-03-1992<br>05-11-1992 |
| US 5806082 | A | 08-09-1998 | US | 5574880 A | 12-11-1996 |
| EP 0855648 | A | 29-07-1998 | EP<br>JP | 0855648 A2<br>10232779 A | 29-07-1998<br>02-09-1998 |

EPO FORM P0460

Pour tout renseignement concernant cette annexe : voir Journal Officiel de l'Office européen des brevets, No.12/82